# EUROPEAN PATENT SPECIFICATION

(11) **EP 0 634 803 B1**
(45) Date of publication and mention of the grant of the patent: **14.05.1997**
(21) Application number: 94304052.7
(22) Date of filing: 06.06.1994
(51) Int. Cl.: H01M 4/48, H01M 10/40

(54) **Cathode materials for lithium batteries**
Kathodenmaterial für Lithiumbatterien
Matières cathodiques pour batteries au lithium

(30) Priority: 07.06.1993 JP 159982/93; 11.05.1994 JP 120782/94
(43) Date of publication of application: 18.01.1995
(73) Proprietor: HONDA GIKEN KOGYO KABUSHIKI KAISHA, Minato-ku Tokyo 107 (JP)
(72) Inventor: Oki, Naohiko c/o KABUSHIKI KAISHA HONDA, Chuo, Saitama 351 (JP); Noguchi, Minoru c/o KABUSHIKI KAISHA HONDA, Chuo, Saitama 351 (JP); Demachi, Atsuhi c/o KABUSHIKI KAISHA HONDA, Chuo, Saitama 351 (JP); Sato, Kenji c/o KABUSHIKI KAISHA HONDA, Chuo, Saitama 351 (JP); Araki, Kazuhiro c/o KABUSHIKI KAISHA HONDA, Chuo, Saitama 351 (JP)
(74) Representative: Calamita, Roberto

(56) References cited:
- EP-A- 0 503 901
- JP-A- 5 225 981
- JP-A- 5 299 088
- JP-A-03 105 858
- PROCEEDINGS OF THE SYMPOSIUM ON HIGH POWER, AMBIENT TEMPERATURE LITHIUM BATTERIES, vol.92, no.15, October 1991, PHOENIX, ARIZONA, USA pages 113 - 126 D. GUYOMARD ET AL. 'LITHIUM METAL-FREE RECHARGEABLE LI1+XMN2O4/CARBON CELLS'
- CHEMICAL ABSTRACTS, vol. 115, no. 10, 9 September 1991, Columbus, Ohio, US; abstract no. 95941n, OKADA ET AL. 'MANUFACTURE OF SECONDARY NONAQUEOUS BATTERIES'
- "L": Document so quoted for its' casting doubt on the first deposit character of JP 159982/83 and, thus, validity of the convention priority claim, whole doc.

## Description

The present invention relates to cathode materials used in lithium batteries in which carbon materials are used as anode materials, and methods for producing the same.

Various sulfides and oxides have hitherto been proposed as cathode materials of lithium batteries. Compound oxides and amorphous compounds have also been proposed. For example, Japanese Patent Unexamined Publication No. 59-134561/1984 discloses a cathode active material composed of a solid solution prepared by adding phosphorus pentaoxide to vanadium pentaoxide and burning the resulting mixture, followed by rapid quenching. Japanese Patent Unexamined Publication No. 2-33868/1990 discloses a cathode formed of an amorphous powder prepared by melting and rapidly quenching a mixture of vanadium pentoxide and 30 mol% or less of phosphorus pentoxide. Even if these cathode materials are used, however, the problem can not be solved that the repetition of charge and discharge causes a reduction in capacity. Accordingly, no cathode material satisfactory in cycle stability has been obtained yet. Further, conductive agents are required to be added to the cathode materials because of their low conductivity. In spite of the addition of the conductive agents, a large current flow causes large polarization, resulting in decreased energy density. Furthermore, as to the amorphous compounds, it has been desired to obtain the stable compounds easily.

In order to solve these problems, the present inventors have already proposed a cathode material for a lithium battery comprising an amorphous solid solution comprising vanadium pentoxide, diphosphorus pentoxide and an alkaline earth metal oxide in a specified ratio, and a method producing the same (Japanese Patent Unexamined Publication No. 5-299088/1993), and a cathode material for a lithium battery comprising an amorphous solid solution comprising vanadium pentoxide, diphosphorus pentoxide, an alkaline earth metal oxide and cobalt oxide, and a method for producing the same (Japanese Patent Unexamined Publication No. 5-225981).

These vanadium pentoxide cathode materials are satisfactory in charge-discharge cycle stability, stable and amorphous, and stable amorphous cathode materials can be produced by these methods However, when these cathode materials are used in combination with carbon anodes, the problem arises that the charge capacity is low to the discharge capacity in the cathodes at initial cycles. Namely, some of lithium remains in the cathodes, and is not dedoped. As the battery systems, therefore, the amount of lithium in the carbon anodes decreases, which causes a reduction in capacity.

It is therefore a primary object of the present invention to provide a vanadium pentoxide cathode material which can give a lithium battery satisfactory in charge-discharge efficiency, prevented from lowering in the capacity of a carbon anode, and excellent in long-term cycle stability from initial cycles.

Another object of the present invention is to provide methods for producing this cathode material easily.

According to the present invention, there is provided a cathode material for a lithium battery comprising a solid solution comprising V₂O₅, CoO₂, P₂O₅, MO (wherein M represents an alkaline earth metal element) and at least one lithium compound selected from the group consisting of lithium-oxygen compounds, lithium halides and lithium oxygen acid salts.

Further, the present invention provides a method for producing a cathode material for a lithium battery which comprises melting a mixture of V₂O₅, CoO₂, P₂O₅, MO (wherein M represents an alkaline earth metal element) and at least one lithium compound selected from the group consisting of lithium-oxygen compounds, lithium halides and lithium oxygen acid salts to form a melt, and then putting the melt into water to pulverize it.

Furthermore, the present invention provide a method for producing a cathode material for a lithium battery which comprises melting a mixture of V₂O₅, CoO₂, P₂O₅, MO (wherein M represents an alkaline earth metal element) and at least one lithium compound selected from the group consisting of lithium-oxygen compounds, lithium halides and lithium oxygen acid salts to form a melt, and then pressing the melt with metal plates to pulverize it.

For the cathode materials of the present invention, the resulting solid solutions are preferably heat treated at a temperature of 100 to 500°C after the putting of the melt into water or the pressing with the metal plates, and before or after the pulverization. On heat treatment, the conductivity is improved to obtain the cathode materials excellent in cycle stability, small in polarization and decreased in a reduction in energy density.

These and other objects and advantages of this invention will become more apparent and more readily appreciated from the following detailed description of the presently preferred exemplary embodiments of the invention taken in conjunction with the accompanying drawings of which:
Fig. 1 is a graph showing the relationship between the amount of lithium added and the initial charge-discharge efficiency in Examples 1 to 5 and Comparative Example 1;
Fig. 2 is a graph showing the relationship between the cycle number and the discharge capacity in Examples 1 to 5 and Comparative Example 1;
Fig. 3 is a graph showing the relationship between the cycle number and the discharge termination potential in Examples 1 to 5 and Comparative Example 1;
Fig. 4 is a graph showing the relationship between the heat-treating conditions and the resistivity in Examples 6 to 10 and Comparative Example 2;
Fig. 5 is a graph showing the relationship between the heat-treating conditions and the change in potential on the stoppage of discharge in Examples 6 to 10 and Comparative Example 2;
Fig 6 is a graph showing the relationship between the cycle number and the discharge termination potential in Examples 6 to 10 and Comparative Example 2;
Fig. 7 is a graph showing the relationship between the charge-discharge capacity and the potential in Examples 6 to 10 and Comparative Example 2;
Fig. 8 shows X-ray diffraction patterns of cathode material powders obtained in Examples 6 to 9 and Comparative Example 2;
Fig. 9 is a schematic view showing a structure of a cathode half cell for evaluation of electrodes; and
Fig. 10 is a front view partially containing a cross sectional view showing a lithium secondary battery using a cathode material for a lithium battery of the present invention.

The cathode material of the present invention comprises a solid solution comprising V₂O₅, CoO₂, P₂O₅, MO (wherein M represents an alkaline earth metal element) and a Li compound. The alkaline earth metal oxide (MO) is preferably MgO or CaO.

The Li compound is at least one compound selected from the group consisting of lithium-oxygen compounds, lithium halides and lithium oxygen acid salts such as Li₂O, LiOH H₂O, Li₂CO₃, LiF, LiCl, LiBr and LiI.

The ratio of the respective ingredients contained in the solid solution is as follows:
V₂O₅: 64 to 92 mol%, preferably 65 to 80 mol%
CoO₂: 10 mol% or less based on V₂O₅, preferably 1 to 6 mol%
P₂O₅: 1 to 24 mol%, preferably 2 to 15 mol%
MO: 2 to 25 mol%, preferably 2 to 15 mol%
(wherein V₂O₅ + P₂O₅ + CoO₂ + MO = 100 mol%)

Less than 64 mol% of V₂O₅ reduces the discharge capacity, whereas more than 92 mol% of V₂O₅ causes the difficulty in making the solid solution amorphous, which leads to the unsatisfactory result as the cathode material. If the content of CoO₂ is less than 1 mol% based on V₂O₅, the effect caused by addition of CoO₂ (namely, a more improvement in cycle stability) is not obtained in some cases. On the other hand, if the content of CoO₂ exceeds 10 mol%, both the initial capacity and cycle stability are decreased. Further, less than 1 mol% of P₂O₅ brings about the difficulty in making the solid solution amorphous, which leads to the unsatisfactory result as the cathode material, whereas more than 24 mol% of P₂O₅ reduces the discharge capacity. Furthermore, less than 2 mol% of MO brings about the difficulty in making the solid solution amorphous, which leads to the unsatisfactory result as the cathode material, whereas more than 25 mol% of MO reduces the discharge capacity.

The cathode material containing the amorphous solid solution comprising above-mentioned ingredients in such molar ratio ranges is satisfactory in cycle stability. In the present invention, however, the Li compounds are further added thereto to previously dope lithium between layers of V₂O₅. Irreversible lithium not dedoped at initial cycles is added on synthesis, whereby the charge and discharge can be conducted at a charge-discharge efficiency of 100% from the first cycle.

The amount of such a Li compound is adjusted so as to be able to reversibly cycle to the designed amount of the charge-discharge cycle capacity of the cathode material from initial cycles. Namely, the amount of the Li compound is preferably 2.0 mols or less per mol of V₂O₅. More than 2.0 mols of the Li compound unfavorably causes the difficulty in making the solid solution amorphous. The amount thereof is preferably 0.1 to 2.0 mols, more preferably 0.25 to 1.65 mols and most preferably 0.30 to 1.0 mol.

The cathode material of the present invention comprises the solid solution comprising V₂O₅, CoO₂, P₂O₅, MO and the Li compound as described above, and exhibits an amorphous structure, for example, by X-ray diffraction. However, on heat treatment thereof, the conductivity is improved, resulting in the more preferred cathode material excellent in cycle stability, small in polarization and decreased in a reduction in energy density even at a large current flow. The reason for this is considered to be that electrochemically, the potential linearly varies without having a flat portion, similarly with the amorphous material, thereby improving the cycle stability, and from X-ray diffraction, the ratio of amorphous portions is decreased to enlarge the structure unit, thereby improving the conductivity and reducing the polarization.

Methods for producing the cathode materials of the present invention are described below.

In the methods of the present invention, V₂O₅, CoO₂, P₂O₅, MO (wherein M represents an alkaline earth metal element) and the Li compound described above are mixed and melted to form a melt, and then the melt is put into water or pressed with metal plates. In melting, it is preferred that the mixture is kept at 200 to 500°C for 30 minutes to 6 hours and further at 560 to 740°C for 5 minutes to 1 hour.

The solid solution thus obtained is amorphous.

In order to obtain amorphous solid solutions, rapid quenching is usually required. In general, the melts are rapidly quenched at room temperature at a quenching rate of about 10⁶ °C/sec using twin copper rollers. In the present invention, V₂O₅, CoO₂, P₂O₅, MO and the Li compound are mixed, whereby the amorphous solid solution can be obtained even by the water quenching method (rapid quenching rate: 10² to 10³ °C/sec) or the metal plate pressing method (rapid quenching rate: 10 to 10⁴ °C/sec) which is low in rapid quenching rate. The amorphous solid solution can therefore be easily obtained without using a large-scaled rapid quenching device. The resulting amorphous solid solution is very stable, and the excellent cathode material can be obtained by pulverizing the amorphous solid solution mechanically.

Further, in the present invention, the amorphous solid solutions thus obtained are heat treated preferably at a temperature of 100 to 500°C, more preferably 150 to 400°C and most preferably 200 to 300°C after the putting of the melt into water or the pressing with the metal plates, and before or after the pulverization. Heat treatment may be conducted either in the air or in a stream of hydrogen. The atmosphere in which heat treatment is carried out is not particularly limited. On heat treatment, the solid solutions vary from a homogeneous isotropic amorphous structure to a crystalline structure to improve the conductivity, thereby obtaining the cathode materials excellent in cycle stability, small in polarization and decreased in a reduction in energy density even at a large current flow. A heat-treating temperature of less than 100°C requires a long period of treating time, resulting poor efficiency, whereas a temperature exceeding 500°C causes sintering and further a temperature exceeding 600°C causes melting.

The heat-treating time can be prolonged when the treating temperature is low, and shortened when the temperature is high, thereby controlling the treating time. When a larger amount of the material is treated, a longer period of time is required with respect to heat conduction, and when a smaller amount of the material is treated, the treatment effect can be exhibited for a shorter period of time. This heat-treating time is usually 30 minutes to 20 hours, and when about 50 g of a sample is heat treated in a crucible as described in examples shown below, the time is about 1 to 5 hours.

When the cathode materials are used to prepare cathodes, the grain size of the cathode materials is not necessarily restricted. However, the use of the cathode materials having a grain size of 5 µm or less can provide highly efficient cathodes. In this case, conductive agents such as acetylene black and binding agents such as powdered fluororesins can be added to the cathode materials, mixed in a dry state to form mixtures. The mixtures are then rolled through rollers, followed by drying to prepare the cathodes. The amount of the conductive agents added may be 5 to 50 parts by weight per 100 parts by weight of cathode material, and preferably 7 to 10 parts by weight. In the present invention, the cathode materials are satisfactory in conductivity, so that the amount of the conductive agents used can be reduced. The binding agents are preferably compounded in an amount of 5 to 10 parts by weight per 100 parts by weight of cathode material.

Any nonaqueous electrolytes are used in batteries using the cathode materials of the present invention, as long as they are chemically stable to the cathode materials and anode materials and lithium ions are transferable therethrough to electrochemically react with the cathode materials. In particular, compounds formed by combinations of cations and anions are preferably used. Examples of such cations include but are not limited to Li⁺, and examples of such anions include but are not limited to halide anions of the group Va elements such as PF₆⁻, AsF₆⁻ and SbF₆⁻, halogen anions such as I⁻ (I₃⁻), Br⁻ and Cl⁻, perchlorate anions such as ClO₄⁻, and anions such as HF₂⁻, CF₃SO₃⁻ and SCN⁻. Examples of the electrolytes having such cations and anions include LiPF₆, LiAsF₆, LiSbF₆, LiBF₄, LiClO₄, LiI, LiBr, LiCl, LiAlCl₄, LiHF₂, LiSCN and LiSO₃CF₃. Of these compounds, LiPF₆, LiAsF₆, LiBF₄, LiClO₄, LiSbF₆ and LiSO₃CF₃ are particularly preferred.

The nonaqueous electrolytes are generally used in a state in-which the electrolytes have been dissolved in solvents. In this case, there is no particular restriction on the solvents. However, solvents having a relatively high polarity are preferably used. Examples of such solvents include propylene carbonate, ethylene carbonate, butylene carbonate, diethyl carbonate, dimethyl carbonate, tetrahydrofuran, 2-methyltetrahydrofuran, dioxolane, dioxane, dimethoxyethane, glymes such as diethylene glycol dimethyl ether, lactones such as γ-butyrolactone, phosphates such as triethyl phosphate, borates such as triethyl borate, sulfur compounds such as sulfolane and dimethyl sulfoxide, nitriles such as acetonitrile, amides such as dimethylformamide and dimethylacetamide, dimethyl sulfate, nitromethane, nitrobenzene and dichloroethane. These solvents may be used alone or in combination. Of these solvents, one selected from ethylene carbonate, propylene carbonate, butylene carbonate, tetrahydrofuran, 2-methyltetrahydrofuran, dimethoxyethane, dioxolane, γ-butyrolactone, diethyl carbonate and dimethyl carbonate, or mixtures thereof are particularly suitable.

The nonaqueous electrolytes also include organic solid electrolytes composed of polymers such as polyethylene oxide, polypropylene oxide, polyethylene oxide crosslinked with isocyanates and phosphazene polymers having ethylene oxide oligomers as side chains which are impregnated with the above-mentioned nonaqueous electrolytes; and inorganic solid electrolytes such as inorganic ion derivatives (for example, Li₃N and LiBCl₄) and lithium glasses (for example, Li₄SiO₄ and Li₃BO₃).

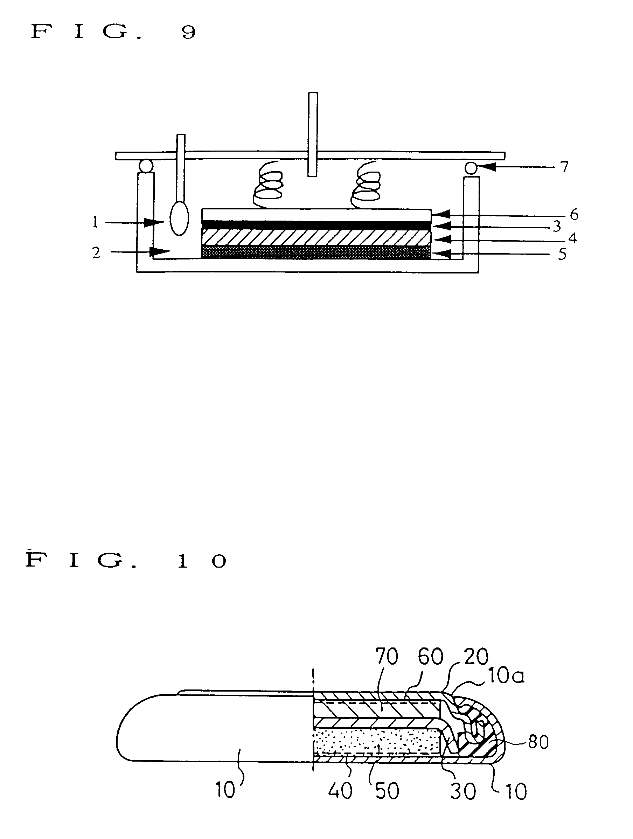

A lithium secondary battery using the cathode material of the present invention is described in more detail by reference to Fig. 10.

Referring to Fig. 10, the lithium secondary battery using the cathode material of the present invention comprises a button-shaped cathode case 10 having an opening 10a, an anode cap 20 which seals the opening 10a, a separator 30 with fine perforations which partitions the inside of the cathode case 10 into two spaces, a cathode 50 accommodated in the space on the cathode side and having a cathode collector 40 arranged on the side of the cathode case 10, and an anode 70 accommodated in the space on the anode side and having an anode collector 60 arranged on the side of the anode cap 20.

Anode materials used as the above-described anode 70 include, for example, the anode materials described in PCT International Publication No. WO 93/10566, Japanese Patent Unexamined Publication No. 3-176963/1991 and Japanese Patent Unexamined Publication No. 4-79170/1992. In this case, the anode materials described in PCT International Publication No. WO 93/10566 are preferably used because the cathode can receive a large current flow.

As the separator 30 described above, nonwoven, woven and knitted fabrics made of synthetic resins such as polytetrafluoroethylene, polypropylene and polyethylene can be used. The fabrics are porous, and the electrolytes can be passed therethrough and contained therein.

The reference numeral 80 designates an insulating polyethylene packing arranged along an inner wall of the cathode case 10 for supporting the anode cap 20 in an insulated state.

In the present invention, the Li compounds are further added to the V₂O₅-CoO₂-P₂O₅-MO materials excellent as the cathode materials to produce the amorphous solid solutions. Li is therefore previously doped between layers of V₂O₅ to introduce irreversible lithium not dedoped at initial cycles into the cathode materials, whereby the charge and discharge can be conducted at a charge-discharge efficiency of 100% from the first cycle.

When the above-mentioned amorphous solid solutions are further heat treated, the conductivity is improved, resulting in the more preferred cathode materials excellent in cycle stability, small in polarization and decreased in a reduction in energy density even at a large current flow. The reason for this is considered to be that electrochemically, the potential linearly varies without having a flat portion, similarly with the amorphous materials, thereby improving the cycle stability, and from X-ray diffraction, the ratio of amorphous portions is decreased to enlarge the structure unit, thereby improving the conductivity and reducing the polarization.

According to the present invention, the amorphous solid solutions of the stable V₂O₅-CoO₂-P₂O₅-MO-Li compounds can be easily obtained. When the amorphous solid solutions are further heat treated, the conductivity can be improved, keeping the homogeneous isotropic structure of the amorphous materials, thereby obtaining the cathode materials excellent in cycle stability, small in polarization and decreased in a reduction in energy density even at a large current flow.

Further, the use of these solid solutions thus obtained as the cathode materials can provide cathodes satisfactory in charge-discharge efficiency from the first cycle, and the use of the resulting cathodes can prevent the capacity of carbon anodes from lowering and can give lithium batteries excellent in long-term cycle stability.

The following examples are given to illustrate the present invention and are not intended to be limitations on the scope of the invention.

### EXAMPLE 1

V₂O₅, CoO₂, P₂O₅ and CaO were weighed and mixed so as to give a molar ratio of 76:4:10:10. LiOH H₂O was further weighed and mixed therewith in an amount of 0.33 mol per mol of V₂O₅. Then, the mixture was maintained at 750°C for 30 minutes to melt the above-mentioned mixture. The melted mixture was rapidly cooled by putting it between two metal plates to obtain an amorphous solid solution.

After pulverization of the solid solution thus obtained, 10% by weight of ketjen black and polytetrafluoroethylene (PTFE) (the weight ratio of ketjen black to PTFE = 1/1) was added thereto and mixed, followed by pressing to form a cathode.

A graphite electrode previously doped with lithium was used as an anode, Cellguard 2502 (Daicel Chemical Industries, Ltd.) was used as a separator, and a 1 mol/l solution of LiClO₄ in a solvent of propylene carbonate (PC) and dimethoxyethane (DME) (the weight ratio: 1:1) was used as an electrolyte to conduct a charge-discharge cycle test.

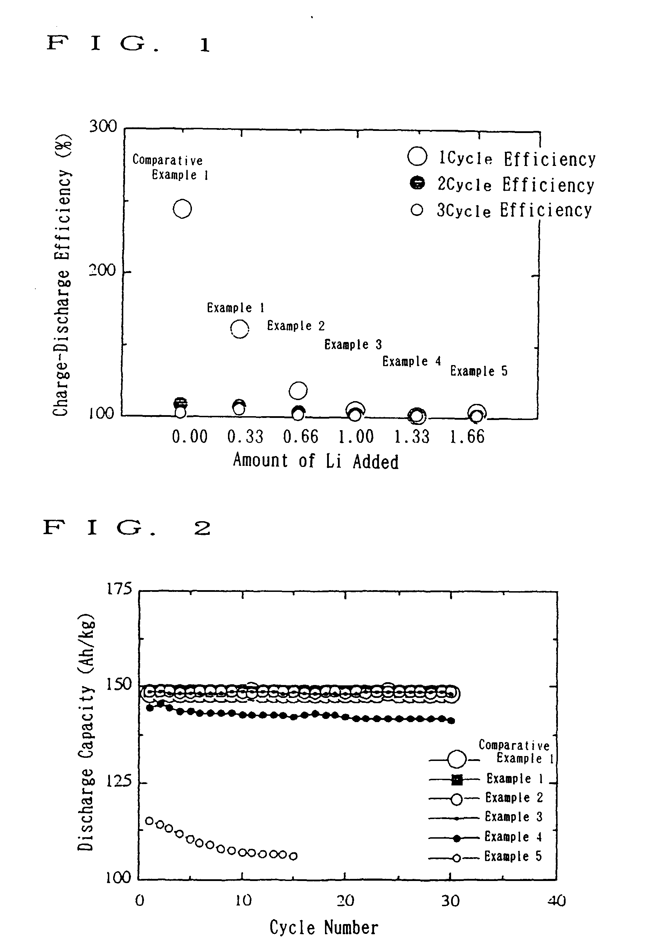

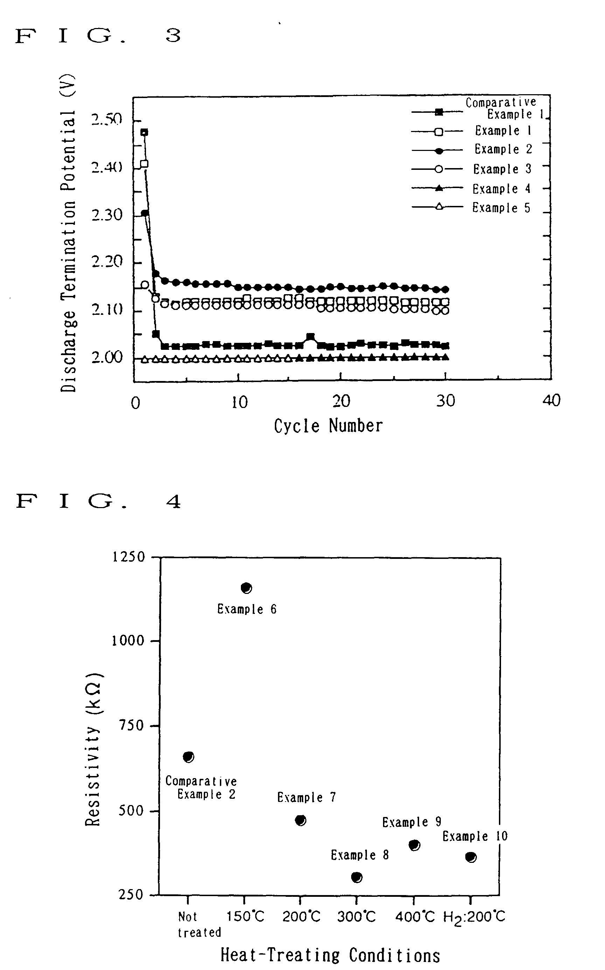

The test was conducted at a charge-discharge current density of 1.6 mA/cm², at a charge termination potential of 3.8 V, and at a discharge termination potential of 2.0 V or 150 Ah/kg. The relationship between the amount of lithium added and the initial charge-discharge efficiency is shown in Fig. 1, the relationship between the cycle number and the discharge capacity is shown in Fig. 2, and the relationship between the cycle number and the discharge termination potential is shown in Fig. 3.

### COMPARATIVE EXAMPLE 1

A cathode material was prepared and tested in the same manner as with Example 1 with the exception that LiOH H₂O was not added. Results are shown in Figs. 1 to 3.

### EXAMPLE 2

A cathode-material was prepared and tested in the same manner as with Example 1 with the exception that LiOH H₂O was added in an amount of 0.66 mol per mol of V₂O₅. Results are shown in Figs. 1 to 3.

### EXAMPLE 3

A cathode material was prepared and tested in the same manner as with Example 1 with the exception that LiOH H₂O was added in an amount of 1.0 mol per mol of V₂O₅. Results are shown in Figs. 1 to 3.

### EXAMPLE 4

A cathode material was prepared and tested in the same manner as with Example 1 with the exception that LiOH H₂O was added in an amount of 1.33 mols per mol of V₂O₅. Results are shown in Figs. 1 to 3.

### EXAMPLE 5

A cathode material was prepared and tested in the same manner as with Example 1 with the exception that LiOH H₂O was added in an amount of 1.66 mols per mol of V₂O₅. Results are shown in Figs. 1 to 3.

As is apparent from Fig. 2, the charge-discharge cycles can be stably conducted up to a Li amount added of 0 to 0.75 mol per mol of V₂O₅ at 150 Ah/kg. However, as is shown in Fig. 1, when no Li compound is added (Comparative Example 1), 60% of doped Li is not dedoped at an efficiency of the first cycle of 250%, which causes no contribution to the later charge-discharge cycles, resulting in a reduction in capacity. In contrast, when the Li compound is added, the efficiency of the first cycle approaches 100%. In Examples 3 and 4, 100% complete reversibility is observed from the first cycle.

Further, from Fig. 3, a smaller amount of the Li compound exhibits a higher discharge termination potential of the first cycle. However, when no Li compound is added (Comparative Example 1), the discharge termination potential stable in the cycles is lower than that in Examples 1 to 3. The addition of the Li compound therefore improves reversibility at the initial cycles.

### EXAMPLE 6

V₂O₅, CoCO₃ and Ca(H₂PO₄)₂.H₂O were weighed so as to give a V₂O₅/CoB₂/P₂O₅/CaO molar ratio of 87:5:4:4, and LiOH H₂O was further weighed so as to give a Li/V₂O₅ molar ratio of 0.6. Then, they were mixed in a ball mill, and placed in a crucible. The mixture was heated in the air in an electric furnace, and maintained at 400°C for 30 minutes. Further, the mixture was heated, and maintained at 740°C for 30 minutes. The resulting melted material was dropped on a copper plate, and pressed with another copper metal from the upper side, thereby rapidly cooling it to obtain an amorphous solid solution.

The solid solution thus obtained was pulverized with a planetary ball mill, and subsequently with a jet mill, and classified to obtain a cathode material powder having an average particle size of 2 µm. This powder was heat treated at 150°C for 2 hours, and 10% by weight of a polytetrafluoro-ethylene powder (Teflon 7-J) was added thereto. After mixing, a disk having a diameter of 10 mm and a thickness of 1 mm was formed by powder compression molding. Electrodes of SUS 304 were pressed to both ends thereof, and its resistivity was measured with an impedance analyzer at 1 kHz.

The polarization and the charge-discharge cycle test were carried out in the following manner. First, a conductive agent (Ketjen Black EC 600JD) and a binder [the above-mentioned polytetrafluoro-ethylene powder (Teflon 7-J)] were each added in an amount of 7.5% by weight to the cathode material powder thus obtained, and mixed, followed by powder pressing and rolling to obtain a 40-mm wide, 400-µm thick sheet. Then, using a cathode half cell shown in Fig. 9 which comprises a counter electrode [a 40-mm wide, 400-µm thick cathode (preliminarily discharged up to 2.7 V vs Li)], a reference electrode (Li), an electrolyte [a 1 mol/l solution of LiPF₆ in a solvent of propylene carbonate (PC) and dimethoxyethane (DME) (the volume ratio: 1:1)] and a separator (a glass mat), both the stoppages of charge and discharge were cycled for 30 minutes at a charge-discharge current density of 1.6 mA/cm², discharging at 150 Ah/kg cut and charging at a constant voltage of +3.8 V (vs Li).

Referring to Fig. 9, the reference numeral 1 is the reference electrode (Li), the reference numeral 2 is the electrolyte, the reference numeral 3 is the counter electrode, the reference numeral 4 is a separator, the reference numeral 5 is a test electrode, the reference numeral 6 is a collector (Al) and the reference numeral 7 is an O ring.

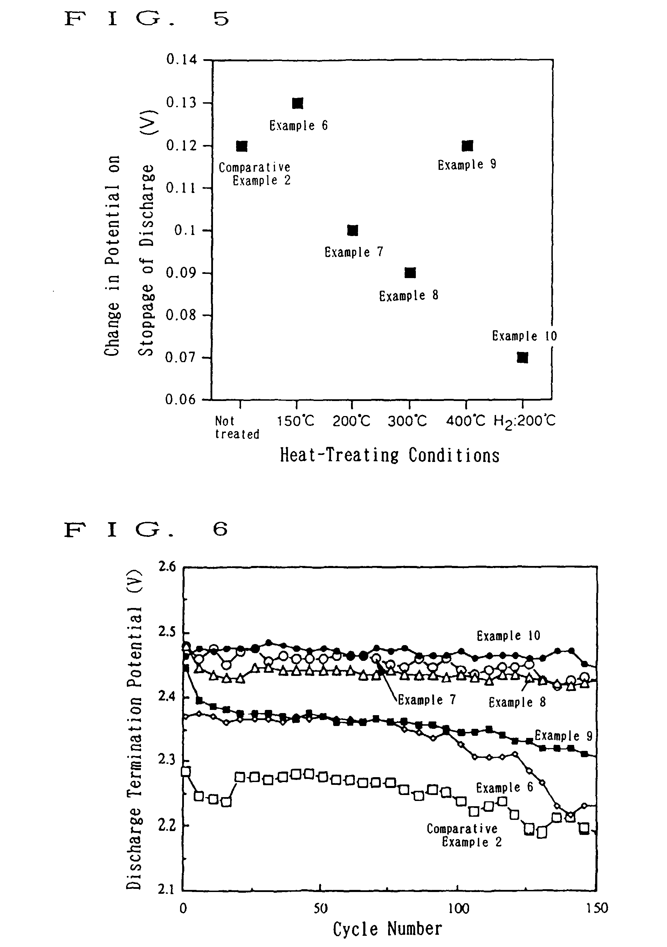

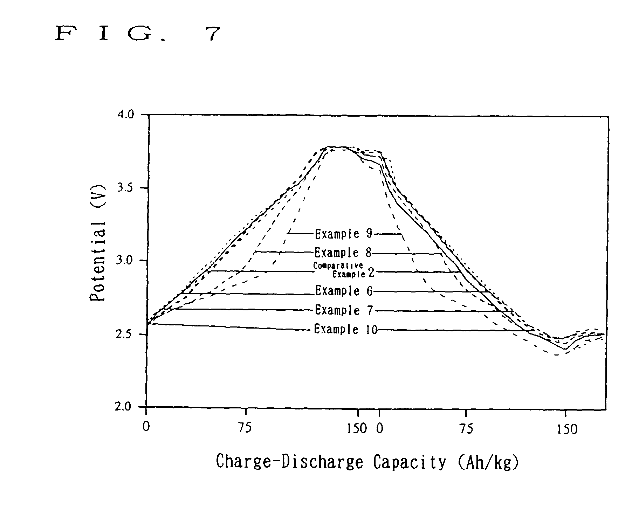

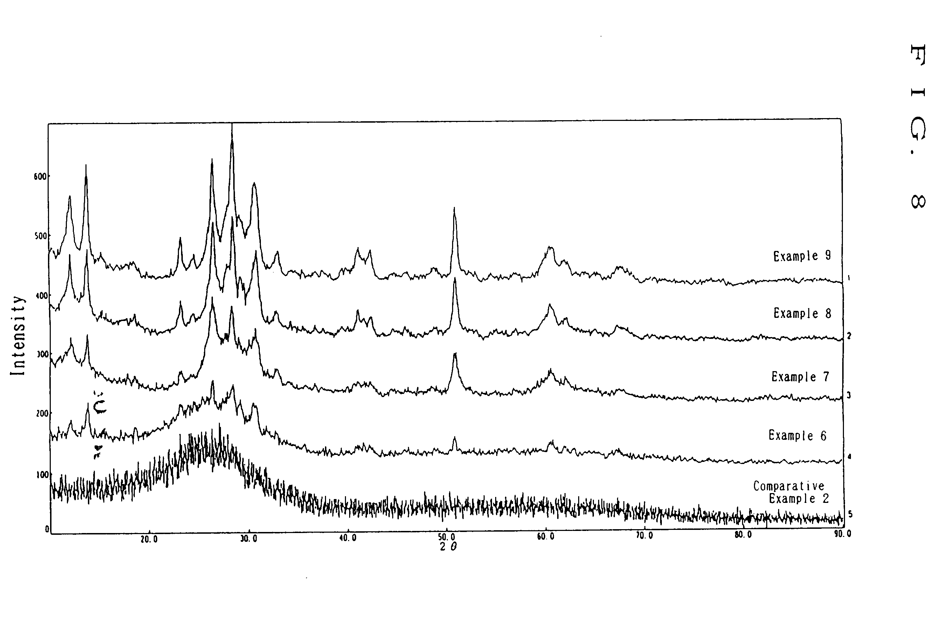

The relationship between the heat-treating conditions and the resistivity is shown in Fig. 4, the relationship between the heat-treating conditions and the change in potential on the stoppage of discharge is shown in Fig. 5, the relationship between the cycle number and the discharge termination potential is shown in Fig. 6, the relationship between the charge-discharge capacity and the potential is shown in Fig. 7, and X-ray diffraction patterns of the resulting cathode material powders are shown in Fig. 8.

### EXAMPLES 7 TO 10

Various tests were carried out in the same manner as with Example 1 with the exception that the cathode material powder obtained in Example 6 was heat treated at 200°C (Example 7), at 300°C (Example 8), at 400°C (Example 9) in the air or at 200°C in a stream of hydrogen (Example 10). Results are shown in Figs. 4 to 8.

### COMPARATIVE EXAMPLE 2

Various tests were carried out in the same manner as with Example 6 with the exception that the cathode material powder obtained in Example 6 was not heat treated. Results are shown in Figs. 4 to 8.

Fig. 4 shows that the cathode material heat treated at 200°C or more is significantly decreased in resistivity. Fig. 5 reveals that the electrochemical polarization is also reduced with a decrease in resistivity shown in Fig. 4, wherein the change in potential on the stoppage of discharge in Fig. 5 means the difference in potential between the beginning and the end of the stoppage of discharge. The smaller the difference, the smaller the polarization. Fig. 6 indicates that all the heat-treated materials (Examples 6 to 10) are higher in discharge termination potential than the material not heat treated, and therefore excellent in energy density, and that particularly, the materials heat treated at a temperature of 200 to 300°C can extremely improve their performance. Fig. 7 shows that the linear potential curves having no flat portions which characterize amorphousness are obtained at a heat-treating temperature of 300°C or less. Fig. 8 reveals that higher heat-treating temperature provides higher peaks, resulting larger crystalline structure units.

## Claims

1. A cathode material for a lithium battery comprising a solid solution comprising V₂O₅, CoO₂, P₂O₅, MO (wherein M represents an alkaline earth metal element) and at least one lithium compound selected from the group consisting of lithium-oxygen compounds, lithium halides and lithium oxygen acid salts.

2. A cathode material as claimed in claim 1, wherein the amount of said Li compound is 2 mols or less per mol of V₂O₅.

3. A cathode material as claimed in claim 1 or claim 2, wherein said solid solution is a heat-treated solid solution.

4. A method for producing a cathode material for a lithium battery, which method comprises producing a melt of a mixture of V₂O₅, CoO₂, P₂O₅, MO (wherein M represents an alkaline earth metal element) and at least one lithium compound selected from the group consisting of lithium-oxygen compounds, lithium halides and lithium oxygen acid salts, solidifying said melt and pulverising the solidified melt.

5. A method as claimed in claim 4, wherein said melt is solidified by cooling in water.

6. A method as claimed in claim 4, wherein said melt is solidified by pressing between metal plates.

7. A method as claimed in any one of claims 4 to 6, wherein heat treatment is conducted at a temperature of 100 to 500°C after said melt is solidified and before or after pulverisation.

8. A lithium battery comprising a cathode of a cathode material as claimed in any one of claims 1 to 3.

## Patentansprüche

1. Kathodenmaterial für eine Lithiumbatterie, umfassend eine feste Lösung, umfassend V₂O₅, CoO₂, P₂O₅, MO (worin M ein Erdalkalimetallelement darstellt) und mindestens eine Lithiumverbindung, ausgewählt aus der Gruppe, bestehend aus Lithium-Sauerstoffverbindungen, Lithiumhalogeniden und Lithiumsauerstoffsäuresalzen.

2. Kathodenmaterial nach Anspruch 1, worin die Menge der Lithiumverbindung 2 Mol oder weniger pro Mol V₂O₅ beträgt.

3. Kathodenmaterial nach Anspruch 1 oder 2, worin die feste Lösung eine wärmebehandelte feste Lösung ist.

4. Verfahren zur Herstellung eines Kathodenmaterials für eine Lithiumbatterie, welches Verfahren umfaßt Herstellen einer Schmelze eines Gemisches aus V₂O₅, CoO₂, P₂O₅, MO (worin M ein Erdalkalimetallelement darstellt) und mindestens einer Lithiumverbindung, ausgewählt aus der Gruppe, bestehend aus Lithium-Sauerstoffverbindungen, Lithiumhalogeniden und Lithiumsauerstoffsäuresalzen, Verfestigen der Schmelze und Pulverisieren der verfestigten Schmelze.

5. Verfahren nach Anspruch 4, worin die Schmelze durch Kühlen in Wasser verfestigt wird.

6. Verfahren nach Anspruch 4, worin die Schmelze durch Pressen zwischen Metallplatten verfestigt wird.

7. Verfahren nach einem der Ansprüche 4 bis 6, worin eine Wärmebehandlung bei einer Temperatur von 100 bis 500 °C durchgeführt wird, nachdem die Schmelze verfestigt ist und vor oder nach der Pulverisierung.

8. Lithiumbatterie, umfassend eine Kathode aus einem Kathodenmaterial nach einem der Ansprüche 1 bis 3.

## Revendications

1. Matière de cathode pour pile au lithium, comprenant une solution solide comprenant V₂O₅, CoO₂, P₂O₅, MO (où M représente un élément de métal alcalino-terreux) et au moins un composé du lithium choisi dans le groupe constitué des composés lithium-oxygène, des halogénures de lithium et des sels acides de lithium et d'oxygène.

2. Matière de cathode selon la revendication 1, dans laquelle la quantité dudit composé de Li est de 2 moles ou moins par mole de V₂O₅.

3. Matière de cathode selon la revendication 1 ou la revendication 2, dans laquelle ladite solution solide est une solution solide ayant subi un traitement thermique.

4. Procédé de préparation d'une matière de cathode pour une pile au lithium, ledit procédé comprenant la préparation d'une masse fondue d'un mélange de V₂O₅, CoO₂, P₂O₅, MO (où M représente un élément de métal alcalino-terreux) et d'au moins un composé du lithium choisi dans le groupe constitué des composés lithium-oxygène, des halogénures de lithium et des sels acides de lithium et d'oxygène, la solidification de ladite masse fondue et la pulvérisation de la masse fondue solidifiée.

5. Procédé selon la revendication 4, dans lequel ladite masse fondue est solidifiée par refroidissement dans de l'eau.

6. Procédé selon la revendication 4, dans lequel ladite masse fondue est solidifiée par compression entre des plaques de métal.

7. Procédé selon l'une quelconque des revendications 4 à 6, dans lequel le traitement thermique est effectué à une température de 100 à 500 °C après que ladite masse fondue soit solidifiée et avant ou après pulvérisation.

8. Pile au lithium comprenant une cathode en matière de cathode telle que revendiquée dans l'une quelconque des revendications 1 à 3.
